(19) **Europäisches Patentamt**
**European Patent Office**
**Office européen des brevets**

(11) **EP 4 567 796 A1**

(12) **EUROPEAN PATENT APPLICATION**

(43) Date of publication:
**11.06.2025 Bulletin 2025/24**

(51) International Patent Classification (IPC):
**G11B 27/28** (2006.01)    **G11B 27/031** (2006.01)
**G06V 20/40** (2022.01)

(21) Application number: **23383254.2**

(22) Date of filing: **05.12.2023**

(52) Cooperative Patent Classification (CPC):
**G11B 27/28; G06V 20/49; G11B 27/031**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Telefonica Innovacion Digital SL**
**28050 Madrid (ES)**

(72) Inventors:
• **Núñez-Romero Casado, Álvaro**
 **28050 Madrid (ES)**
• **del Pino Díaz, Javier**
 **28050 Madrid (ES)**
• **Ramírez Vicente, Francisco José**
 **28050 Madrid (ES)**
• **González Pérez, Pablo**
 **28050 Madrid (ES)**

(74) Representative: **Carlos Hernando, Borja**
**Garrigues IP, S.L.P.**
**Plaza de Colón, 2**
**28046 Madrid (ES)**

(54) **METHOD, SYSTEM AND COMPUTER PROGRAMS FOR CUTTING VIDEOS**

(57) A method, system, and computer programs for cutting videos are proposed. The method comprises performing by one or more processors the following steps: obtaining a video to be cut; obtaining at least one desired cut-off point for said video; executing a decision-making procedure to determine whether the desired cut-off point is feasible. The decision-making procedure, for each pair of consecutive video frames contained within the desired cut-off point, comprises checking whether there is an active subtitle during the desired cut-off point, disregarding the desired cut-off point if there is an active subtitle; assessing video frame's distance, similarity, and quality characteristics of a scene taking place in the desired point using image analysis techniques and/or one or more artificial intelligence techniques; comparing the result of the assessing step with a given threshold; determining feasibility of the desired cut-off point based on a result of said comparison.

Fig. 1

## Description

Technical Field

The present invention generally relates to video cutting techniques. More specifically, to a method, system and computer programs for cutting videos, particularly, in (user-) specified blocks.

Background of the Invention

In an increasingly pervasive era of video content, numerous challenges arise in ensuring optimal user experience. One significant issue lies in the inability of current systems to effectively handle user-initiated interruptions, often leading to a loss of context and disruption of narrative continuity. Traditional methods of video segmentation, based primarily on user-defined intervals or fundamental frame differences, frequently need to catch up. They need to pay more attention to critical narrative elements such as context, action, and dialogue, to avoid resulting in a disjoint viewing experience upon resumption. Furthermore, more than the reliance on a simple object or character recognition within frames is required to understand the storyline comprehensively.

KR 101050255-B1 describes a method of video segmentation based on energy difference between successive frames. A frame extraction unit extracts the frames which constitute an object video for partition. According to the energy difference between the extracted frame and a neighbor frame, a coefficient filtering unit determines a partitionscheduled position. A motion analysis unit judges the continuity between front and rear frames at the determined partitioning position. A partitioning position determination unit determines the scene partitioning position of a moving picture.

CN 108280386-B provides a monitoring scene detection method and apparatus. The method comprises the steps of obtaining a real-time scene image and a corresponding historical scene image; according to the real-time scene image and the historical scene image, determining a response threshold; based on the response threshold, obtaining a first feature point set in the real-time scene image and a second feature point set in the historical scene image; performing matching on the first feature point set and the second feature point set to obtain at least one feature point pair; obtaining a relative deviation distance between a first feature point and a second feature point in the at least one feature point pair; and according to the relative deviation distance, determining the scene conversion degree between the real-time scene image and the historical scene image.

US 11042776-B1 discloses a method of searching for similar images at a computing system. The method includes receiving an input image having content, and generating a feature vector corresponding to the input image according to a trained classifier model. The feature vector has multiple components. The method further includes encoding the feature vector as a similarity hash by quantizing each component; and for each reference image in a plurality of reference images: obtaining a reference hash for the reference image; computing similarity between the input image and the reference image by computing a distance between the reference hash and the similarity hash; and determining whether the computed distance is within a predetermined threshold. When the computed distance is within the predetermined threshold, the computing system returns the reference image as an image that is similar to the input image.

Furthermore, scientific document "A universal image quality index" proposes a new universal objective image quality index, which is easy to calculate and applicable to various image processing applications. Instead of using traditional error summation methods, the proposed index is designed by modeling any image distortion as a combination of three factors: loss of correlation, luminance distortion, and contrast distortion.

Description of the Invention

The present invention provides a dynamic, user-defined film-slicing approach that leverages advanced Artificial Intelligence (AI), histogram analysis, and statistical techniques. The invention transcends the standard frame-by-frame dissection by intelligently dividing video content into user-specified blocks while avoiding breaking critical narrative components. As a result, it ensures a seamless continuity of context and storyline when users resume viewing, significantly enhancing the overall experience. This combination of user-defined segmentation and intelligent context preservation represents a novel advancement in the field, positioning the present invention as a good solution that fundamentally redefines video engagement.

According to a first aspect, present invention provides a method for cutting videos. The method comprises performing by one or more processors the following steps: obtaining a video to be cut; obtaining at least one desired cut-off point for said video; and executing a decision-making procedure to determine whether the desired cut-off point is feasible, the decision-making procedure, for each pair of consecutive video frames contained within the desired cut-off point, comprising: checking whether there is an active subtitle during the desired cut-off point, disregarding the desired cut-off point if there is an active subtitle; assessing video frame's distance, similarity, and quality characteristics of a scene taking place in the desired point using different image analysis techniques and/or one or more artificial intelligence techniques;

comparing a result of the assessing step with a given threshold; and determining feasibility of the desired cut-off point based on a result of said comparison.

Other embodiments of the invention that are disclosed herein also include a computing device and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Particularly, according to the present invention, the desired cut-off point is obtained from a user.

In some embodiments, if the cut-off point is disregarded, the method in the checking step further comprises suggesting a new cut-off point.

In some embodiments, the assessing step comprises calculating a distance between each pair of consecutive video frames using the Manhattan algorithm.

In some embodiments, the assessing step comprises calculating how color and brightness values compare between each pair of consecutive video frames by performing histogram analysis of each pair of consecutive video frames.

In some embodiments, the assessing step comprises calculating a Universal Quality Index (UQI) score between each pair of consecutive video frames.

In some embodiments, the assessing step further comprises detecting how elements and/or actions change between video frames by comparing the pairs of consecutive video frames using one or more artificial intelligence techniques.

In some embodiments, the comparison comprises converting each video frame to grayscale and resizing the converted video frames; expanding the video frames into a three-channel format; normalizing their pixel values to a [0, 1] range; and computing a difference value between the pair of consecutive video frames by measuring a cosine distance between their feature vectors.

In some embodiments, the decision-making procedure further comprises detecting conversations and sound effects in each pair of consecutive video frames using an audio activity detection tool.

The pair of consecutive video frames can be original video frames or thumbnails of original video frames.

In some embodiments, the checking step comprises using artificial intelligence and Natural Language Processing (NLP) techniques.

The present invention offers a new approach to video editing through the automated identification of cut-off points, thereby optimizing the narrative flow and continuity of video content. The invention leverages state-of-the-art methodologies and technologies ensuring a precise and thorough analysis of video frames. The invention's ability to evaluate the quality and similarity of images while considering dialogues from subtitles gives it a unique advantage in preserving the original context and the viewer's experience.

Furthermore, the invention's ability to intelligently integrate and correlate multiple evaluation parameters sets a new standard for automated video editing. The invention's algorithm adapts to different scenes and accommodates variations within the exact location, enhancing the accuracy of cut-off point determination. The adaptability and precision offered by the invention demonstrate a significant leap forward in video editing technology, with potential applications spanning numerous domains, including film production, online content creation, and educational video materials. The invention, thus, represents a compelling step toward a future where video editing can be made more efficient and context-aware through intelligent automation.

Some of the main advantages of the present invention are:

- It offers distinct advantages with each technique. By prioritizing active subtitles it ensures that dialogues remain uninterrupted, preserving the narrative flow. Through the Manhattan algorithm and histograms, image features provide a quantitative measure of frame differences, allowing for precise segmentations based on visual content. The Universal Quality Index (UQI) ensures that the selection of cut points is based on consistent image quality. Lastly, the integrated AI capability identifies and tracks objects and individuals, ensuring that scenes remain consistent and necessary actions or characters aren't abruptly cut off, further enhancing narrative continuity.
- The proposed method allows users to control the continuity of multimedia content. It provides a seamless resumption of content, enhancing the user experience significantly. This makes the multimedia platform more appealing to users who value continuity and contextual understanding.
- With the various techniques used the system performs efficient and precise slicing of the multimedia content. This enhances the platform's performance and speeds up the processing time, providing superior service to the end user.
- The system's in-depth understanding of content using subtitles, AI, and image features can be utilized beyond slicing to power a recommendation engine. Such an engine can recommend similar scenes, themes, or films based on the user's watching pattern, offering a more personalized experience.
- Given the digital nature of the methodology, it is highly scalable. It can be deployed across a wide array of multimedia content, regardless of the genre or length. The scalability translates into broader market reach and potential revenue growth for the multimedia platform.

- The platform can provide more detailed and searchable metadata by generating precise and intelligent cuts and summarizing blocks using AI/NLP. This allows users to navigate content more effectively, improving the platform's accessibility.
- The methodologies used, such as AI, NLP, and advanced image processing, are highly adaptable and can be further refined or expanded in the future. As AI technology continues to evolve, it can further enhance the precision of content slicing and open up new applications, providing a competitive advantage to the company.

Brief Description of the Drawings

The previous and other advantages and features will be more fully understood from the following detailed description of embodiments, with reference to the attached figures, which must be considered in an illustrative and non-limiting manner, in which:

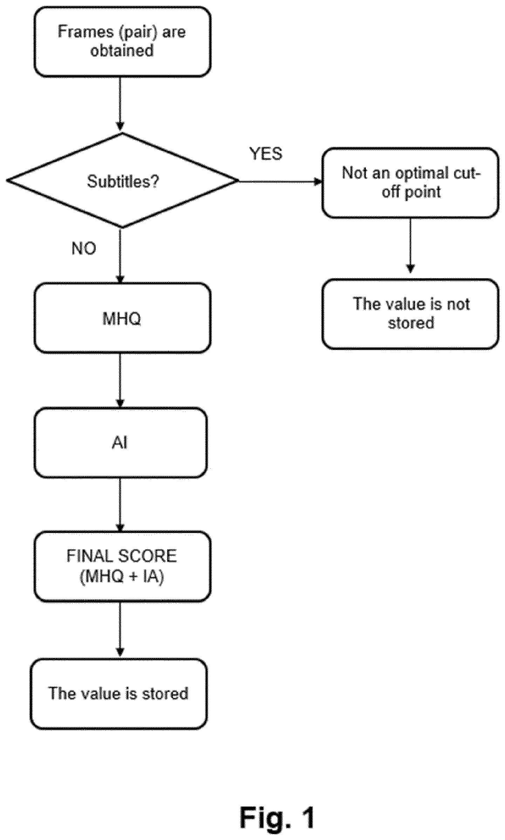

Fig. 1 is a flow chart illustrating the full process of a method for cutting videos, according to an embodiment.

Detailed Description of the Invention and of Preferred Embodiments

Present invention relates to a new video segmentation solution that is particularly based on the following metrics: subtitles, image features (including color and brightness), image quality, and AI for object identification. The invention prioritizes active subtitles to avoid disrupting dialogues. Particularly, the invention also employs the Manhattan algorithm, histograms, and the Universal Quality Index (UQI) to assess video frame similarities. Likewise, the invention can integrate AI techniques/algorithms for identifying objects and individuals across the video frames, ensuring scene consistency. A wise combination of these techniques according to the proposed methodology enables optimal video partitioning while preserving narrative continuity.

The integration of subtitles serves a crucial role in the proposed system, and the presence of subtitles significantly influences the decision-making process for the cut-off point. As subtitles provide a detailed understanding of dialogues, any cut-off points with dynamic or active subtitles are disregarded to preserve narrative continuity. In some embodiments, if there's an active subtitle during the desired cut-off point, the proposed method can suggest a new cut-off point.

Furthermore, the proposed method also applies other techniques to detect whether or not it is possible to cut a scene taking place in the desired cut-off point (or in the new suggested new cut-off point). These techniques are mainly based on image analysis (i.e. image metadata, histograms, etc.) and/or AI techniques. Similarly, AI techniques can be used to detect the elements and/or actions occurring at that moment. In this way, it can be determined if performing the cut at that point is feasible, even if there are no subtitles.

Image characteristics are particularly determined through the Manhattan algorithm, histograms, and the UQI.

The Manhattan algorithm, also known as the L1 norm, calculates image similarity by taking the sum of the absolute differences between the pixel values of two images. The algorithm calculates the Manhattan distance by treating each pixel value as a point in n-dimensional space. A value closer to zero indicates a higher degree of similarity between frames. For example, for two images A and B, where each image has pixels represented as $A_i$ and $B_i$ (where i is the pixel index) the Manhattan distance (L1) can be calculated using the following formula: $L1 = \sum_{i=1}^{n} |A_i - B_i|$ , where: n is the total number of pixels in the image, $A_i$ is the value of pixel i in image A, and $B_i$ is the value of pixel i in image B. The Manhattan distance per pixel is calculated by dividing the Manhattan distance between the number of pixels.

Histograms, conversely, offer a graphical representation of the tonal distribution in a digital image. They plot the number of pixels for each tonal value, thus providing a broad overview of the image's graphical range. By comparing the histograms of two images, present invention can quantify the correlation between various parameters, such as brightness and color. Here, a value closer to one indicates a higher level of similarity.

The correlation method for comparing histograms is one of the techniques used in image processing and computer vision to measure the similarity between two histograms. Correlation is a measure that indicates how related two sets of data are. The formula to calculate the correlation between two histograms $H_1$ and $H_2$ is:

$$Correlation = \frac{\sum_i (H_1(i) - \bar{H}_1)(H_2(i) - \bar{H}_2)}{\sqrt{\sum_i (H_1(i) - \bar{H}_1)^2 \sum_i (H_2(i) - \bar{H}_2)^2}}$$

where:

   $H_1$ (i) and $H_2$ (i) are the mean values of the histograms at position i,

$\overline{H}_1$ *and* $\overline{H}_2$ *are the mean values of the histograms.*

The UQI is another critical parameter. It quantifies the quality of images, which contributes to determining the similarity of frames. A UQI value closer to one represents a higher similarity among structures. The UQI, along with the histogram, can identify scenes within the same setting based on an analysis of the ambiance of a scene, such as its brightness and color palette.

$$UQI = \frac{4\sigma_{xy}x_{mean}y_{mean}}{x_{mean}^2 + y_{mean}^2(\sigma_x^2 + \sigma_y^2)}$$

where:

$x_{mean}$ *and* $y_{mean}$ *are the means of images x and y respectively,*

$\sigma_x^2$ *and* $\sigma_y^2$ *are the variances of images x and y respectively,*

$\sigma_x^2$ *and* $\sigma_y^2$ *are the variances of images x and y respectively*

AI on the other hand can check the similarity between frames and effectively ensures continuity within the same scene. However, its effectiveness diminishes when a shot changes within the same scene, as this can disrupt the tracking of elements. To address this limitation, in some embodiments, AI techniques are used to ensure it is indeed the same scene, even if certain elements are missing.

The amalgamation of different techniques used by the present invention increases the reliability and robustness of the proposed cut-off point determination system.

An exemplary implementation of the present invention is designed to assess potential cutting points in a video by evaluating differences between consecutive video frames, particularly in segments without subtitles. Initially, essential libraries such as pysrt for subtitle processing, OpenCV for potential image operations, TensorFlow and TensorFlow Hub for deep learning functionalities, PIL for image manipulations, Scipy for distance computations, and Numpy for numerical operations can be used to implement the invention.

A pre-trained AI model from TensorFlow Hub, specifically a "lite" version of EfficientNet, facilitates the comparison of video frames. This model is loaded with a specific function that receives a model URL, returning the model primed for feature extraction. When comparing two video frames, each is first converted to grayscale and resized. Despite the grayscale conversion, these images are expanded into a three-channel format, mimicking RGB images, after which their pixel values are normalized to the range [0,1]. These preprocessed images are fed into the model to obtain their feature representations. One core component of this technique is the function designed to compute the distance or difference between two video frames, which is realized by measuring the cosine distance between their feature vectors. This metric offers insight into the similarity or dissimilarity of the video frames, guiding decisions on potential cut points.

In a particular embodiment, the proposed method for cutting videos performs as follows:

Reading of the video: load two video frames into the program.
Setting Up for Comparison: the loaded video frames are then prepared for the comparison process.

Comparing the Images:

◦ Subtitles: verification of the absence of subtitles. This is the main process and determines whether a cut-off point is feasible or not.
◦ Manhattan score: this measures the overall difference between the pixel values of the two video frames.
◦ Histogram score: this evaluates how the distribution of pixel intensities (brightness values) compares between the two video frames.
◦ UQI Score: this metric gives an idea of the perceived quality similarity between the two video frames.
◦ AI: it detects elements and/or actions in the scene and also, how the detected elements and/or actions change between video frames.

Displaying Results: the names of the two video frames being compared can be printed, followed by the computed scores, giving an idea of their similarity.

Returning the Results: finally, the method can return four scores in a list (Manhattan score, histogram score, UQI score and AI score), which can be used for further analysis or decision-making along with the subtitles analysis.

The main execution loop of the method, for every pair of successive video frames, examines/verifies the presence of subtitles. The distance between video frames is computed, this is done even if at least one frame lacks subtitles. All differences are accumulated, sorted by magnitude, and each block's top five most distinct frames are flagged as possible cut points. These recommended cuts can be eventually retrieved for further review.

Subtitles, a significant determinant for cut decisions, can be processed using the pysrt library. Time intervals during which subtitles appear on screen can be extracted from a .srt subtitle file. A separate function subsequently can determine if a given video frame falls within any of these intervals, indicating the presence or absence of subtitles and therefore, a dialogue.

To better illustrate the comparison process, let's examine a comparison between two identical video frames for calibration:

*Manhattan norm: 0.0 /per pixel: 0.0 Histogram comparison OpenCV: 1.0 UQI: 1.0 AI: 0*
*Comparatively, when two slightly different frames are assessed:*

1. *Manhattan norm / per pixel:* Both values are 0.0. The Manhattan norm measures the sum of the absolute differences between corresponding pixels of the two video frames. A value of 0.0 indicates that the two video frames are identical, as there's no difference between their pixel values.
2. *Histogram comparison OpenCV:* The value is 1.0. This metric compares the distribution of pixel intensities in the two video frames. A score of 1.0 suggests that the histograms (or distributions of pixel values) of the two video frames are identical.
3. UQI: The value is 1.0. The UQI measures the perceived quality similarity between two video frames. A score of 1.0 indicates maximum similarity or identical quality.
4. *AI:* The value is 0 or close to 0. This suggests that the AI algorithm(s) used to assess the video frames found them to be identical or very similar in context.

Comparison of Slightly Different Images
*Manhattan norm: 363374.45893421886 / per pixel: 0.07885730445621068 Histogram comparison OpenCV: 0.815968692412148 UQI: 0.8617931975392433 AI: 0.1*

1. *Manhattan norm / per pixel:* The values are 363374.45893421886 and 0.07885730445621068, respectively. While these numbers are more significant than zero (indicating some difference between the video frames), the per-pixel value is relatively low, suggesting that the overall difference is minor. This means the two video frames are similar but different.
2. *Histogram comparison OpenCV:* The value is 0.815968692412148. This score, being close to 1.0, indicates that the distribution of pixel intensities in the two video frames is quite similar, but there are some differences.
3. *UQI: The value is 0.8617931975392433.* This score suggests that the perceived quality of the two video frames is very similar, but there are slight differences.
4. *AI*: The value is 0.1. This indicates that the AI algorithm found the two video frames very similar in context but with some noticeable differences. The AI might only sometimes identify main characters in different shots within the same context, which can lead to a slightly reduced accuracy.

The AI might not identify the main characters when examining two distinct video frames from different shots occurring within the same context, providing a low coincidence value. However, the Manhattan algorithm confirms they are within the same setting or context, as the output value is relatively low, indicating high similarity. In such cases, the AI's accuracy is lessened, yet combining these values and following the correct logic helps achieve the best possible precision.

Present invention uses an algorithm to automate the cut-off determination process. This algorithm seeks to maximize the function, with a higher output value indicating a better cut-off point. Once a cut-off point is identified (as the user indicates), this serves as the starting point. From here, frames are checked in pairs.

A threshold that determines the number of steps to be taken if a non-optimal cut-off point is encountered can also be defined. All values are normalized in advance to ensure fair comparisons. The system then checks subtitles (S), image values (MHQ: Manhattan - Histograms - UQI), and AI in a sequence prioritized in this order. The final score is obtained by summing MHQ and AI scores. The process is repeated n times based on the number of cut-off points are to be analyzed for each block, ensuring a thorough and precise determination of optimal cut-off points.

In another embodiment, two distinct video frames from different shots occurring within the same context (a school corridor) are obtained. In this case, the AI might fail as it might not identify the main characters (man and woman) and may provide a low coincidence value. On the other hand, the Manhattan algorithm indicates the method is within the same setting or context, as the output value is relatively low (0.18 out of 0, i.e., they are very similar). In contrast, the AI is at 40%, failing to detect the elements. Therefore, the combination of these values and following the correct logic is the ultimate goal to achieve the best possible precision:

*Manhattan norm: 858517. 5399791765 / per pixel: 0.18631023003020322*
*Histogram comparison OpenCV: -0.003258287845730897 UQI: 0.7251375484480082 AI: 0.4*

In some embodiments, the primary objective of the invention is to maximize the function, where the higher the output value, the better the cut-off point. Once a desired cut-off point (as indicated by the user) is identified, this serves as the starting point. From here, video frames are checked in pairs, i.e., Frame A + B, then B + C, C + D, etc. A threshold that determines the number of jumps to be taken in case of a non-optimal cut-off point can be defined.

The general process revolves around examining how different a pair of video frames are. All values are normalized in advance. The sequence can be the following, prioritized in this order:

Check subtitles (S). If subtitles are present, it directly isn't an optimal cut-off point.
Check image values (MHQ): MHQ = Manhattan - Histograms - UQI
Check AI (AI): MHQ+AI
Final Score = MHQ + AI

Fig. 1 illustrates another embodiment of the method. The process is repeated n times based on how many cut-off points are to be analyzed. After obtaining various values, they can be arranged from highest to lowest at the end of the process. The highest value is the primary candidate for the cut point, but it might not be the only one. If the values are sufficiently high, they can be alternative candidate cut points.

In some embodiments, the invention incorporates or uses an audio activity detection tool, such as Audio Tokenization (Audiotok), to identify conversations and sound effects, thereby adding another layer of depth to the analysis. This tool distinguishes background noise from dialogues, recognizes silence, or identifies abrupt changes in soundtracks, thus refining the precision of intelligent film slicing.

Given that different film genres exhibit unique pacing, dialogue frequency, and visual characteristics, the invention, in some embodiments, establishes distinct thresholds for outputs based on the movie's genre. This approach fine-tunes the slicing process, considering, for example, that an action film requires more careful handling of fast-paced scenes, while a drama requires more focus on dialogue continuity.

Moreover, in some embodiments, the invention also use thumbnails of video frames instead of the original full-sized images. This not only enhances computational efficiency by reducing the parameters required for analysis but also accelerates the process without compromising precision significantly. Thumbnails offer an overview of the scene's composition, facilitating quicker recognition of scene shifts..

The invention can also provide block summaries, for instance, by using AI and NLP techniques to analyze the subtitles. This can concisely depict what to expect in the block, making it easier for users to choose the point to resume their viewing. It could also serve as metadata for enhanced searchability and accessibility.

Likewise, in some embodiments, the AI techniques used can predict film grammar, discern cinematographic patterns, and enhance intelligent film slicing. For instance, the AI can be trained to detect close-ups, long shots, or the entry of a new character, providing more parameters to decide the slicing points.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

**Claims**

**1.** A method for cutting videos, the method comprising performing by one or more processors the following steps:

obtaining a video to be cut;

obtaining at least one desired cut-off point for said video; and

executing a decision-making procedure to determine whether the desired cut-off point is feasible, the decision-making procedure, for each pair of consecutive video frames contained within the desired cut-off point, comprising:

- checking whether there is an active subtitle during the desired cut-off point, disregarding the desired cut-off point if there is an active subtitle;
- assessing video frame's distance, similarity, and quality characteristics of a scene taking place in the desired point using different image analysis techniques and/or one or more artificial intelligence techniques;
- comparing a result of the assessing step with a given threshold;
- determining feasibility of the desired cut-off point based on a result of said comparison.

2. The method of claim 1, wherein the desired cut-off point is obtained from a user.

3. The method of claim 1 or 2, wherein if the cut-off point is disregarded, the method in the checking step further comprises suggesting a new cut-off point.

4. The method of any one of the previous claims, wherein the assessing step comprises calculating a distance between each pair of consecutive video frames using the Manhattan algorithm.

5. The method of any one of the previous claims, wherein the assessing step comprises calculating how color and brightness values compare between each pair of consecutive video frames by performing histogram analysis of each pair of consecutive video frames.

6. The method of any one of the previous claims, wherein the assessing step comprises calculating a Universal Quality Index, UQI, score between each pair of consecutive video frames.

7. The method of any one of the previous claims, wherein the assessing step further comprises detecting how elements and/or actions change between video frames by comparing the pairs of consecutive video frames using one or more artificial intelligence techniques.

8. The method of claim 7, wherein the comparison comprises converting each video frame to grayscale and resizing the converted video frames; expanding the video frames into a three-channel format; normalizing their pixel values to a [0, 1] range; and computing a difference value between the pair of consecutive video frames by measuring a cosine distance between their feature vectors.

9. The method of any one of the previous claims, wherein the decision-making procedure further comprises detecting conversations and sound effects in each pair of consecutive video frames using an audio activity detection tool.

10. The method of any one of the previous claims, wherein the pair of consecutive video frames are original video frames.

11. The method of any one of the previous claims 1-9, wherein the pair of consecutive video frames are thumbnails of original video frames.

12. The method of any one of the previous claims, wherein the checking step comprises using artificial intelligence and Natural Language Processing, NLP, techniques.

13. A computing device for cutting videos, comprising:

at least one memory; and

one or more processors, the one or more processors being configured to:

obtain a video to be cut;

obtain at least one desired cut-off point for said video; and

execute a decision-making procedure to determine whether the desired cut-off point is feasible, the decision-making procedure, for each pair of consecutive video frames contained within the desired cut-off point, comprising:

- checking whether there is an active subtitle during the desired cut-off point, disregarding the desired cut-off point if there is an active subtitle;
- assessing video frame's distance, similarity, and quality characteristics of a scene taking place in the desired cut-off point using different image analysis techniques and/or one or more artificial intelligence techniques;
- comparing a result of the assessing step with a given threshold;
- determining feasibility of the desired cut-off point based on a result of said comparison.

14. The device of claim 13, further comprising an audio activity detection tool configured to detect conversations and sound effects in each pair of consecutive video frames, the detected conversations and sound effects being used in the decision-making procedure.

15. A non-transitory computer readable medium comprising code instructions that when executed by at least one processor of a computing device implement the method of any of claims 1 to 12.

**Fig. 1**

| | Europäisches Patentamt European Patent Office Office européen des brevets | **EUROPEAN SEARCH REPORT** | **Application Number** EP 23 38 3254 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/118593 A1 (FU QIANG [US]) 16 April 2020 (2020-04-16) | 1,10,11, 13,15 | INV. G11B27/28 |
| Y | * paragraphs [0022], [0023], [0049], [0053], [0057], [0070], [0071]; claim 11; figure 4 * | 2,4,6 | G11B27/031 G06V20/40 |
| X | US 11 763 564 B1 (SADOUGHI NOURABADI NAJMEH [US] ET AL) 19 September 2023 (2023-09-19) * claim 1; figures 1-10 * * column 6, line 24 - line 37 * * column 7, line 11 - line 51 * * column 9, line 63 - column 10, line 12 * | 1,3,5, 7-15 | |
| X | US 11 336 930 B1 (GUPTA MANISH [IN] ET AL) 17 May 2022 (2022-05-17) <br><br> * abstract * * column 3, line 10 - column 5, line 5; figures 1-5 * | 1,3-5, 8-11, 13-15 | |
| X | US 2022/021950 A1 (WEI WENBO [CN] ET AL) 20 January 2022 (2022-01-20) * paragraphs [0003] - [0005], [0105] - [0110]; figures 1-8 * | 1,3,5, 7-15 | TECHNICAL FIELDS SEARCHED (IPC) G11B G06V H04N |
| Y | US 2012/029668 A1 (KIM JUNG-DAE [KR]) 2 February 2012 (2012-02-02) * figure 7 * | 2 | |
| Y | US 5 767 922 A (ZABIH RAMIN [US] ET AL) 16 June 1998 (1998-06-16) * column 9, line 38 * | 4 | |

-/--

The present search report has been drawn up for all claims

| Place of search | Date of completion of the search | Examiner |
|---|---|---|
| The Hague | 24 April 2024 | Maetz, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................................
& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 23 38 3254

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YEDLA SANDEEP KUMAR ET AL: "Real-time Scene Change Detection with Object Detection for Automated Stock Verification", 2020 5TH INTERNATIONAL CONFERENCE ON DEVICES, CIRCUITS AND SYSTEMS (ICDCS), IEEE, 5 March 2020 (2020-03-05), pages 157-161, XP033762417, DOI: 10.1109/ICDCS48716.2020.243571 [retrieved on 2020-04-21] * figure 1 *<br><br>----- | 6 | |
| | | | **TECHNICAL FIELDS SEARCHED (IPC)** |

The present search report has been drawn up for all claims

| Place of search | Date of completion of the search | Examiner |
|---|---|---|
| The Hague | 24 April 2024 | Maetz, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 23 38 3254

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2024

| Patent document cited in search report | | Publication date | Patent family member(s) | | Publication date |
|---|---|---|---|---|---|
| US 2020118593 | A1 | 16-04-2020 | NONE | | |
| US 11763564 | B1 | 19-09-2023 | NONE | | |
| US 11336930 | B1 | 17-05-2022 | NONE | | |
| US 2022021950 | A1 | 20-01-2022 | CN | 111314775 A | 19-06-2020 |
| | | | EP | 3890332 A1 | 06-10-2021 |
| | | | EP | 4351152 A2 | 10-04-2024 |
| | | | US | 2022021950 A1 | 20-01-2022 |
| | | | US | 2024129600 A1 | 18-04-2024 |
| | | | WO | 2020119464 A1 | 18-06-2020 |
| US 2012029668 | A1 | 02-02-2012 | CN | 102403009 A | 04-04-2012 |
| | | | JP | 2012032817 A | 16-02-2012 |
| | | | KR | 20120012362 A | 09-02-2012 |
| | | | US | 2012029668 A1 | 02-02-2012 |
| US 5767922 | A | 16-06-1998 | NONE | | |

EPO FORM P0459

For more details about this annex : see Official Journal of the European Patent Office, No. 12/82

**REFERENCES CITED IN THE DESCRIPTION**

**Patent documents cited in the description**

- KR 101050255 B1
- CN 108280386 B
- US 11042776 B1